Europäisches Patentamt

European Patent Office

Office européen des brevets

(11) Publication number: **0 217 668 B1**

(12) **EUROPEAN PATENT SPECIFICATION**

(45) Date of publication of patent specification: **13.05.92** (51) Int. Cl.⁵: **H05K 5/02**, H05K 5/00

(21) Application number: **86307605.5**

(22) Date of filing: **02.10.86**

(54) **A cartridge for gaming machine and a gaming machine using the same.**

(30) Priority: **04.10.85 JP 222198/85**

(43) Date of publication of application:
**08.04.87 Bulletin 87/15**

(45) Publication of the grant of the patent:
**13.05.92 Bulletin 92/20**

(84) Designated Contracting States:
**BE DE FR GB IT LU NL SE**

(56) References cited:
**DE-A- 2 736 823      DE-A- 2 822 968**
**GB-A- 2 033 763      US-A- 4 323 979**
**US-A- 4 459 680      US-A- 4 500 879**

(73) Proprietor: **NINTENDO CO. LIMITED**
**60, Fukuine Kamitakamatsu-cho**
**Higashiyama-ku Kyoto(JP)**

(72) Inventor: **Nakagawa, Katsuya**
**115-19, Kamigasa-cho**
**Kusatsu-shi Shiga-ken(JP)**
Inventor: **Yukawa, Masayuki**
**147-17, Yodoshimozu-cho**
**Fushimi-ku Kyoto(JP)**

(74) Representative: **Arthur, Bryan Edward et al**
**4 Dyers Buildings Holborn**
**London, EC1N 2JT(GB)**

Rank Xerox (UK) Business Services
(3.08/2.19/2.0)

## Description

### Field of the Invention

The present invention relates to a cartridge for gaming machine and a gaming machine using the same. More specifically, the present invention relates to a memory cartridge incorporating a memory for game and to a gaming machine using the same.

### Description of the Prior Art

For example, a ROM cartridge having a general or common shape and structure is disclosed in the U.S. Patent No. 4,l49,027.

Also, a gaming machine wherein a ROM cartridge is loaded in a gaming machine main unit by so-called front loading is disclosed in the U.S. Patent No. 4,095,79l.

Any mechanism or structure which prevents a so-called reverse insertion and allows only an authentic cartridge to be used is not disclosed at all in either of the above-described prior arts.

As the prior art for preventing a reverse insertion, in general, arranging a connector of the cartridge while shifting from the center of the opening of the cartridge is well known.

In the case where the connector is shifted from the center in the direction of length of the opening, an extra length is required in the direction of length, and accordingly a problem of restricting miniaturization of the cartridge takes place. Also, in the case where the connector is shifted from the center in the direction of thickness of the connector, a built-in printed circuit board is biased up or down in the direction of thickness of the cartridge, and therefore electronic components can be mounted only on one face of the printed circuit board, and accordingly a problem of restricting the degree of integration of the printed circuit board takes place.

### SUMMARY OF THE INVENTION

Therefore, a principal object of the present invention is to provide a cartridge for gaming machine having a novel shape or structure which prevents a reverse insertion and allows only an authentic cartridge to be used.

Another object of the present invention is to provide a gaming machine which uses a novel cartridge for gaming machine.

To be brief, a first invention is of a memory cartridge for gaming machine which comprises a case having upper and lower faces, a tapered portion formed at least at one side end of the rear face of the case, an edge portion formed at least at one corresponding side end of the surface of the case and having a shape different from the tapered portion, a contacting end adjoining the upper and lower faces, a printed circuit board accommodated in the case, game information generating means for generating information required for a game, and data processing means mounted on the printed circuit board and for executing a predetermined data processing to determine authenticity of the cartridge.

A second invention is, to be brief, of a gaming machine performing a game by inserting a cartridge into a gaming machine main unit as defined in claim 5, wherein the cartridge includes a case, a tapered portion formed at least at one side end of the rear face of the case, an edge portion formed at least at one corresponding one side end of the surface of the case and having a shape different from the tapered portion, a printed circuit board accommodated in the case, game information generating means mounted on the printed circuit board and for generating information for game, a first semiconductor memory mounted on the printed circuit board and for storing a program for determining authenticity of the cartridge, and first data processing means for executing the program stored in the first semiconductor memory, while the gaming machine main unit comprises a cartridge receiving portion for receiving the cartridge, a contacting portion formed at the cartridge inserting portion and being able to contact with the tapered portion when the cartridge is inserted, display signal generating means for generating a display signal for image displaying means based on game information from the game information generating means, a second semiconductor memory being associated with the first semiconductor memory and for storing a program for determining authenticity of the cartridge, and second data processing means having the same performance as that of the first data processing means and for executing the program stored in the second semiconductor memory.

When the cartridge is normally inserted with the surface thereof facing upward, the tapered portion formed on the rear face of the case is inserted smoothly without any trouble. On the other hand, no tapered portion or edge portion is formed on the surface of the case, and therefore when the case is inserted with the rear face thereof facing upward, that is, inserted upside down, the edge portion of the surface thereof checks an insertion of the cartridge. Furthermore, the data processing means mounted on the printed circuit board determines whether the cartridge is authentic or forged.

In accordance with the present invention, a reverse insertion of the cartridge can be prevented reliably by the tapered portion formed at least at one side end of the rear face of the case without shifting the connector of the cartridge from the center as in the conventional cases. Accordingly, the cartridge can be made smaller and also the reverse insertion of the cartridge can be prevented effectively without reducing the degree of integration of the built-in printed circuit board. Also, in accordance with the present invention, the data processing means executed data processing for determining whether or not the cartridge is authentic, and therefore a cartridge is obtainable which can distinguish a cartridge adaptable to the gaming machine from the other cartridges. Furthermore, determination on whether the cartridge is authentic or forged can be made by cooperative actions of the gaming machine and the cartridge, and the use of any inadaptable cartridge can be excluded.

Thus, in accordance with the present invention, only the authentic cartridge can be used, and thereby copying or forging of programs (software) of the game information generating means in the cartridge or of the gaming machine itself can be prevented reliably, and protection of software is performed more completely.

These objects and other objects, features, aspects and advantages of the present invention will become more apparent from the following detailed description of the embodiments of the present invention when taken in conjunction with accompanying drawings.

BRIEF DESCRIPTION OF THE DRAWINGS

Fig. lA is a perspective view of a cartridge for gaming machine as one embodiment as viewed from the surface thereof.

Fig. lB is a perspective view of the same as viewed from the rear face thereof

Fig. 2 is an exploded perspective view of Fig. l embodiment

Fig. 3 is a perspective view showing one example of a gaming machine main unit which can be used for a cartridge.

Fig. 4 is a perspective view showing a front loading apparatus in the gaming machine main unit.

Fig. 5 is a plan view of the front loading apparatus.

Fig. 6 is a front view of the front loading apparatus.

Fig. 7 is an illustrative cross-sectional view taken on line VII-VII in Fig. 5.

Fig. 8 is an illustrative view showing a locking mechanism.

Fig.9 is an illustrative cross-sectional view showing an edge connector

Fig.l0 is a block diagram showing a whole system configuration including the cartridge and the gaming machine main unit.

Fig. ll is a block diagram showing a circuit configuration of a key microprocessor.

Fig. l2 is a timing chart showing operation in Fig. ll.

Fig. l3 is a flowchart showing operations of the embodiment shown in Fig. l0 and Fig. ll.

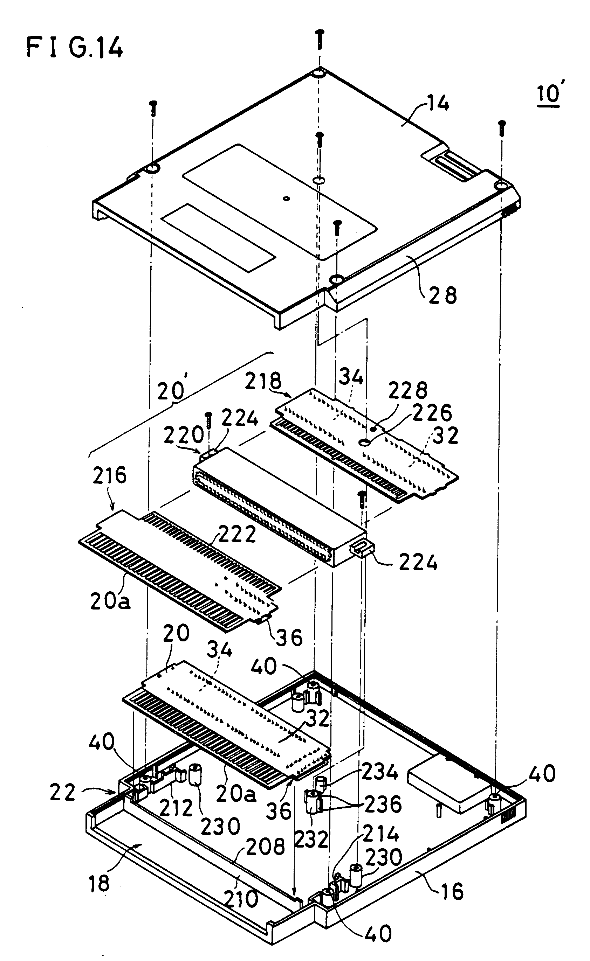

Fig. 14 is an exploded perspective view of a cartridge as another embodiment

DESCRIPTION OF THE PREFERRED EMBODIMENTS

Fig. lA is a perspective view of a cartridge as viewed from the surface thereof, and Fig. lB is a perspective view of the same as viewed from the rear face thereof. A cartridge l0 includes a case l2, and this case l2 is constituted with a lower half l4 and an upper half l6. A rectangular opening l8 is formed at the tip of the case l2 in the direction of insertion thereof, and a tip 20a of a printed circuit board accommodated in the case l2 is exposed in that opening l8.

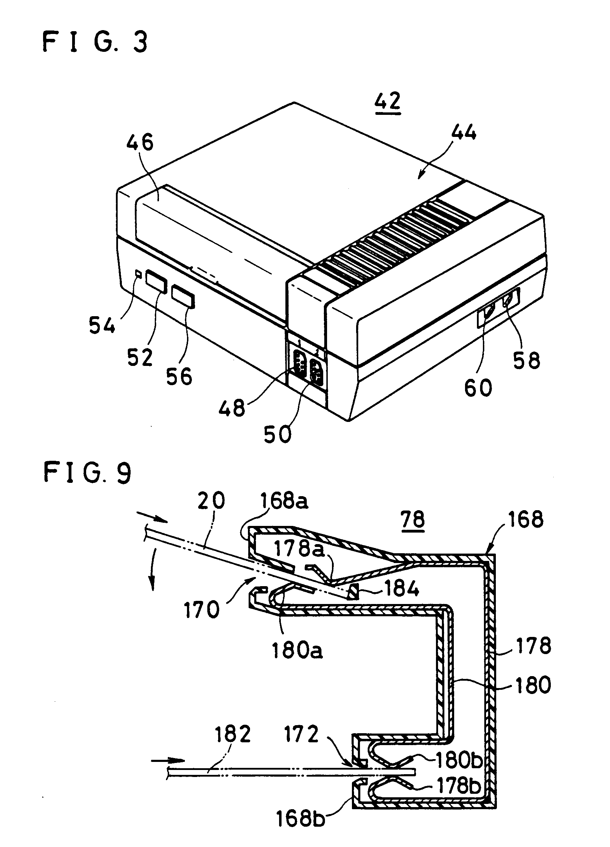

The cartridge l0 is inserted and loaded in a gaming machine main unit 42 as described later (Fig. 3) in the direction as shown by an arrow in Fig. lA with the upper half l6 facing upward. Then, in the vicinity of the tip of the case l2 in the direction of insertion, stepped portions 22 are formed at the both side ends thereof The case l2 is formed in a manner that the width of the tip portion in the direction of insertion is made narrower and the width of rest behind the same is made wider by these stepped portions 22. A configuration similar to these stepped portions 22 is disclosed, for example, as a "neck portion 25" as shown in Fig. l in the U.S. Patent No. 4,500,879. However, in this embodiment, a so-called front loading mechanism is adopted wherein the whole of the cartridge l0 is inserted into the gaming machine main unit 42 (Fig. 3), and therefore, unlike the one in the U.S. Patent No. 4,500,879, these stepped portions 22 do not define the portion of the cartridge to be exposed beyond the main unit, but act as stoppers for setting the insertion amount of the cartridge l0, that is, the case l2 to a constant value.

A concave portion 24 is formed at the rear end of the upper half l6 of the case l2 in the direction of insertion, and a concave portion 26 is formed at the corresponding position of the lower half l4. These concave portins 24 and 26 serve as a pinch portion in taking the cartridge l0 out of the gaming machine main unit 42 (Fig. 3). For this purpose, these concave portions 24 and 26 are formed in a size large enough to be pinched by human figures.

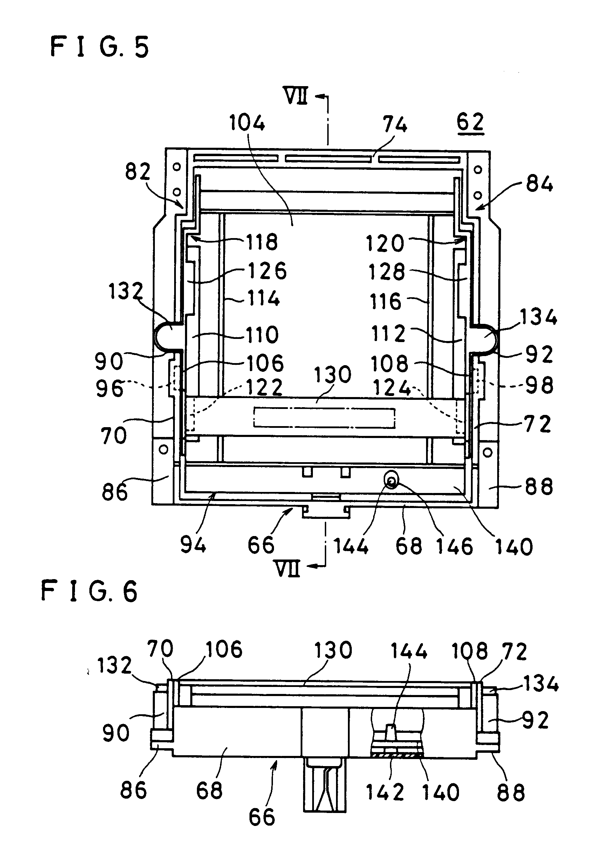

The concave portion 26 of the lower half 14 also acts to inhibit a normal loading of any cartridge other than a predetermined one into the gaming machine main unit. More specifically, the concave portion 26 of the lower half 16 allows loading of only a specially shaped cartridge wherein a concave portion of a certain depth is formed at the position of the concave portion 26 and checks a normal loading of any cartridge having a shape other than that in cooperation with a cylindrical protrusion 144 as shown in Fig. 6 as described later. Meanwhile, in the illustration, to serve also as a pinch portion, the concave portion 26 is formed so that the area thereof is considerably larger than the tip face of the cylindrical protrusion 144, but the concave portion 26 may be formed in a small notched portion or through-hole just allowing this protrusion 144 to be inserted. In this case, whether or not the cartridge is adaptable can be distinguished by a positional relationship or shape relationship between the cylindrical protrusion 144 and the notched portion or through-hole.

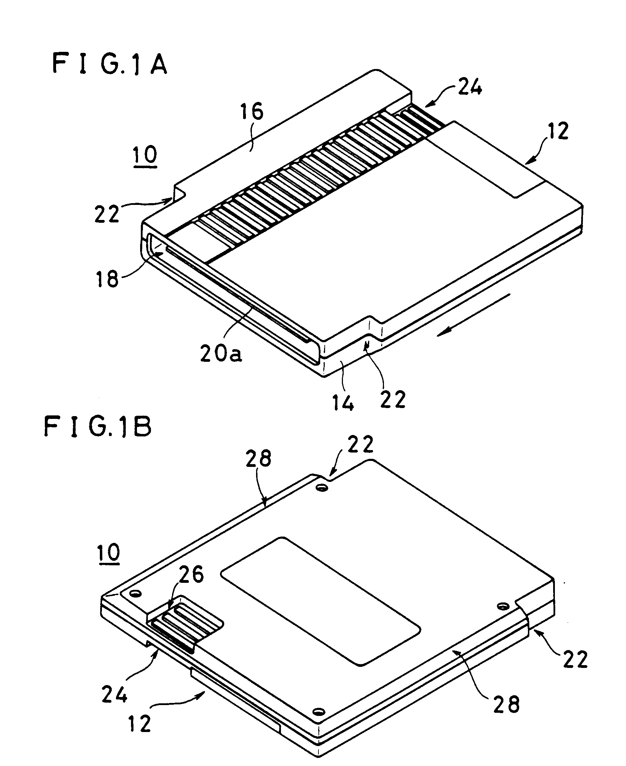

As is well understood from Fig. 1B, tapered portions 28 having a certain inclination are formed at both side ends of the bottom face of the lower half 14. These tapered portions 28 are for preventing the so-called reverse insertion that the cartridge 10 is inserted upside down. Then, edge portions having a shape different from the tapered portions 28 are formed at both side ends of the top face of the upper half 16. However, as an edge portion, a tapered portion having a different inclination from that of the tapered portion 28, an edge portion rounded by an R smaller than the tapered portion 28, or a simple corner portion can be considered. Meanwhile, this tapered portion 28 and the edge portion corresponding thereto may be formed only at one side end of the case in the direction of width.

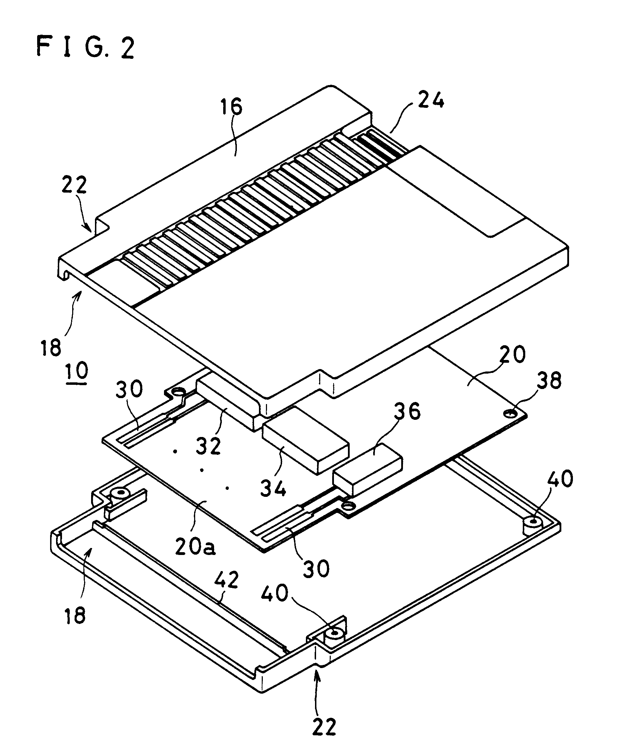

In reference to Fig. 2, inside the case 12 formed by the lower half 14 and the upper half 16, a printed circuit board 20 is accommodated with a predetermined interval kept by a spacer 40, and the tip portion 20a of this printed circuit board 20 is exposed to the opening 18 of the case 12. At this time, the tip of the tip portion 20a of the printed circuit board 20 is positioned inward from the tip face of the opening 18 of the case 12 to prevent that portion from being damaged. On the tip portion 20a, a plurality of connecting electrodes 30, 30, --- being connected to ROMs 32 and 34, a microprocessor 36 and the like which are mounted on the printed circuit board 20 are arranged in a manner of distribution in the direction of width. The printed circuit board 20 is fixed by screwing through a hole 38 formed on the printed circuit board 20 and a hole 40 formed on the lower half 14.

In this embodiment, the ROM 32 functions as a program ROM for storing a program for game, and the ROM 34 works as a character ROM for generating a character signal or data for game. The microprocessor 36 functions as data processing means for performing data processing for determining whether or not the gaming machine main unit 42 wherein the cartridge 10 is loaded is of the kind which is allowed to be used. Accordingly, a determination on whether or not the cartridge is authentic is executed by cooperative actions of the microprocessor 36 and a microprocessor 202 of the gaming machine main unit 42.

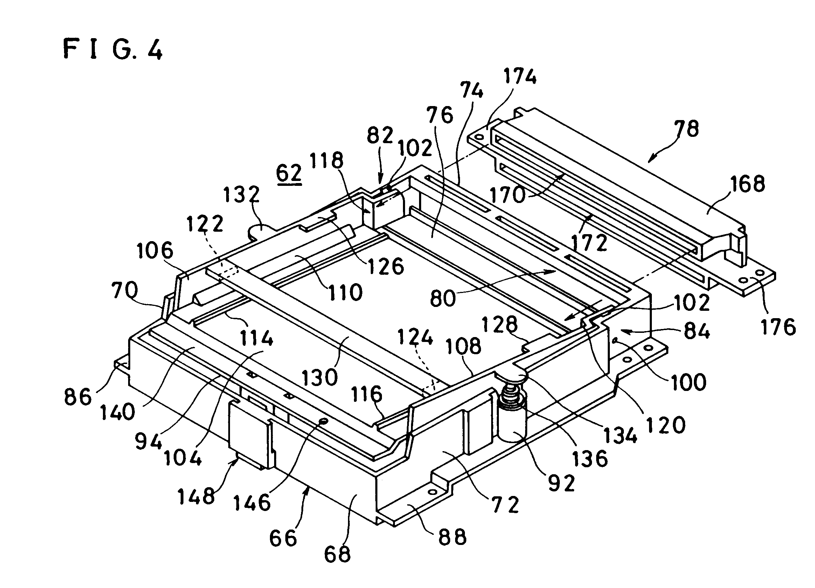

Such a cartridge 10 is inserted into the gaming machine main unit 42 as shown in Fig. 3. This main unit 42 includes a case 44, and a lid 46 is supported in a manner includes of opening or closing on the front end portion of the top face of this case 44. Then, in the case 44, a front loading apparatus 62 is incorporated, which is described in detail later in reference to Fig. 4 through Fig. 7.

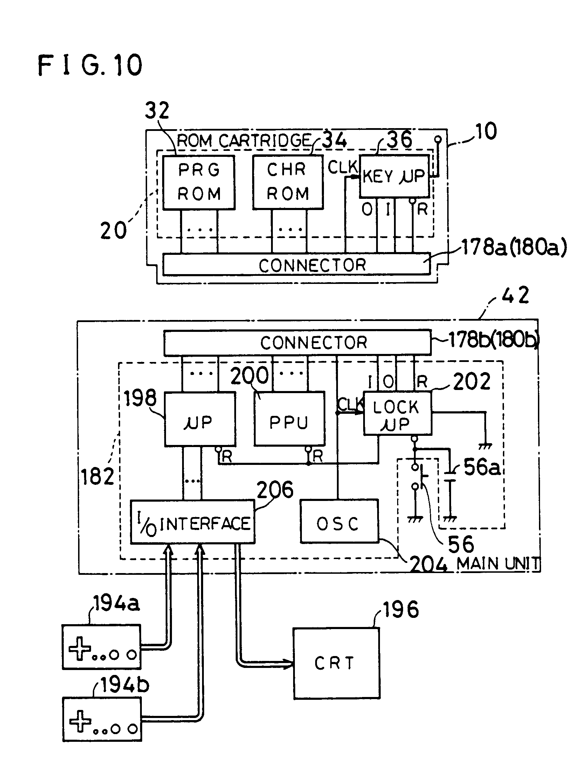

Jacks 48 and 50 are provided on the front face of the case 44, and controllers 194a and 194b (Fig. 10) to be operated for the game by the operator are connected through these jacks 48 and 50. Also, on the lower front face of the case 44, a power switch 52, a light emitting diode 54 for indicating the power switch 52 is turned on and a reset switch 56 are installed. Furthermore, on the right side face of the case 44, an external terminal 58 for sound signal and an external terminal 60 for video signal are installed, which are for giving signals to an image displaying apparatus, for example, a CRT 196 (Fig. 10) from the main unit 42.

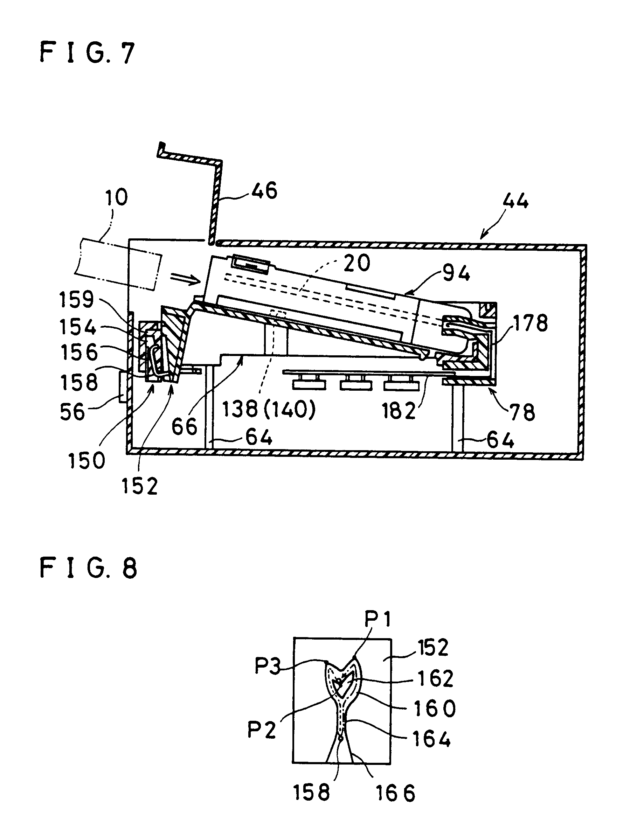

The front loading apparatus 62 includes a frame 66 fixed by screws through spacers 64 in the case 44 (Fig. 3) as shown in Fig. 7. As shown in Fig. 7, this frame 66 has a front wall 68 formed in the front thereof and side walls 70 and 72 formed at both sides thereof, and these right and left side walls 70 and 72 are connected to connecting portions 74 and 76 at the end portions thereof in the direction of depth. Between these connecting portions 72 and 74, a slender opening 80 is formed so that an opening 170 of an edge connector 78 can be inserted thereinto.

In the vicinity of the end portions of the side walls 70 and 74 in the direction of insertion of the cartridge 10, L-shaped stepped portions 82 and 84 are formed. Also, brim portions 86 and 88 are formed on the outside faces of the side walls 70 and 72, and mounting holes for fixing this frame 66 to the case 44 are formed in these brim portions 86 and 88.

On the side faces at nearly the center portion of the side walls 70 and 72 in the direction of insertion of the cartridge, cylindrical spring shoes 90 and 92 as well understood from Fig. 5 and Fig.

6 are formed. In front of these spring shoes 90 and 92, that is, in the rear thereof in the direction of insertion, engaging grooves 96 and 98 (Fig. 5) for defining the rotation range of a tray 94 (Fig. 7) as described later are formed on the inner faces of the side walls 70 and 72. These engaging grooves 96 and 98 are formed extendingly from the bottom ends of the side walls 70 and 72 to the positions of a height of nearly two-thirds of the height thereof. Then, in the vicinity of the stepped portions 82 and 84 of the side walls 70 and 72, shaft holes 100 for rotatably supporting the tray 94 are formed respectively, and grooves 102 extending from the top end portions of the side walls 70 and 72 to these shaft holes 100 are formed at those positions.

In the frame 66, the tray 94 for holding the inserted cartridge is supported rotatably by a shaft inserted into the shaft holes 100. This tray 94 includes a bottom plate 104 and side walls 106 and 108 formed at both sides of this bottom plate 104. Protruding bars 110 and 112 having a triangular cross-section are fixed to the junction corner portions formed by the bottom plate 104 and the side walls 106 and 108. The inclination of these protruding bars 110 and 112 with respect to the bottom plate 104 corresponds to the inclination of the tapered portions 28 of the cartridge 10 (Fig. 1B) as described above. Accordingly, the faces of these protruding bars 110 and 112 work as contacting faces with the tapered portions 28. This means that an inverse insertion of the cartridge 10 is prevented by the tapered portions 28 and the protruding bars 110 and 112.

On the top surface of the bottom plate 104 of the tray 94, protruding bars 114 and 116 having a rectangular or circular arc in cross-section are disposed in the vicinity of the side end portions extendingly in the direction of insertion of the cartridge 10. These protruding bars 114 and 116 prevent the rear face of the cartridge 10 being inserted into the tray 94, that is, the surface of the lower half 14 from being brought in face-contact with the bottom plate 104, thereby serving to reduce the contact resistance. Also, these protruding bars 114 and 116 act as reinforcing members of the bottom plate 104. More specifically even if some warping of the bottom plate 104 in the direction of insertion takes place, space for inserting the cartridge 10 can be secured enough by these protruding bars 114 and 116.

Stepped portions 118 and 120 corresponding to the stepped portions 82 and 84 of the frame 66 are formed at the end portions of the side walls 106 and 108 in the direction of insertion. These stepped portions 118 and 120 engage with the stepped portions 22 of the cartridge 10, working to define the amount of insertion of the cartridge 10 at a constant value.

As well understood from Fig. 4 and Fig. 5, protruding pieces 122, 124, 126 and 128 protruding inward are formed at the top ends of the side walls 106 and 108 of the tray 94. The interval between the bottom end faces of these protruding pieces 122-128 and the top end faces of the protruding bars 114 and 116 is selected equal to or a little larger than the thickness of the case 12 of the cartridge 10. Accordingly, the cartridge 10 is inserted between the protruding bars 114 and 116 and the protruding pieces 122-128. Then, the protruding pieces 122-128 act to prevent the cartridge 10 from going off upward when the tray 94 is rotated downward in the state that the cartridge 10 is inserted as described later.

A reinforcing plate 130 composed of metal or the like is mounted on a pair of protruding pieces 122 and 124 at the rear end side in the direction of insertion of the cartridge 10. This reinforcing plate 130 prevents the bottom plate 104 from warping, and also acts to check an insertion of the cartridge 10 in the state that the tray 94 is pressed downward.

Furthermore, the reinforcing plate 130 is composed of a conductive material, and acts also as means for preventing electric bombardment by discharging charges which are charged on the case 12 in inserting the cartridge 10, when this reinforcing plate 130 is connected electrically to the frame 66. More specifically, when the cartridge 10 is inserted into the tray 94, the surface of the upper half 16 of the case 12 is brought in contact with the reinforcing plate 130. Then, charges on the case 12 are discharged to the electric potential of the frame 66, that is, ground potential through the reinforcing plate 130. Accordingly, electric bombardment to the electronic components 32, 34, 36 and the like mounted on the printed circuit board 20 of the case 12 is prevented, and these electronic components 32, 34 and 36 and the like are protected effectively from electrostatic electricity.

On the top end portions of the side walls 106 and 108 of the tray 94, spring stopping pieces 132 and 134 are formed in an outward-protruding fashion at the positions of the spring shoes 90 and 92 installed on the side walls of the frame 66. Coil springs 136 are held between these spring stopping pieces 132 and 134 and the spring shoes 90 and 92, respectively. The tray 94 is supported by a shaft (not illustrated) penetrating the shaft holes 100 in a manner rotatable around this shaft, and therefore the tray 94 is elastically energized upward by these coil springs 136. Then, engaging protrusions 138 (Fig. 7) for defining the upper limit of the upward rotation by the springs 136 of the tray 94 are formed on the outside faces of the side walls 106 and 108 facing the engaging grooves 96 and 98.

A stepped portion 140 is formed at the rear end of the bottom plate 104 in the direction of depth of the tray 94 (this-side portion in inserting the cartridge), and a through-hole 146 is formed in this stepped portion 140. Inside the front wall 68 of the frame 66, a holding plate 142 is formed under the through-hole 146. A cylindrical protrusion 144 is formed in an upright fashion on this holding plate 142. The outer diameter of the cylindrical protrusion 144 is selected a little smaller than the inner diameter of the through-hole 146, and the height thereof protrudes beyond the top surface of the bottom plate 104 by a length equivalent to the depth of the concave portion 26 (Fig. IB) of the lower half 14. In addition, the cylindrical protrusion 144 is positioned at the concave portion 26 when the cartridge 10 is inserted into the tray 94, and accordingly, downward rotation of the tray 94 is allowed until the concave face of the concave portion 26 contacts with the top end of the cylindrical protrusion 144. Thereby, the normal loading of the cartridge 10 is made possible.

If any cartridge wherein the concave portion 26 is not formed is inserted, the top end of the cylindrical protrusion 144 is brought in direct contact with the rear face of the cartridge, and thereby the downward rotation of the tray 94 is checked. Thus, the cylindrical protrusion 144 acts to inhibit loading of any cartridge other than the one having a predetermined shape in cooperation with the concave portion 26 of the lower half 14.

Furthermore, a locking mechanism 148 is installed in association with the front wall 68 of the frame 66 and the stepped portion 140 of the bottom plate 104 of the tray 94. This locking mechanism 148, as shown in Fig. 7, includes a key mechanism 150 which is provided on the front wall 68 side and is equivalent to a key and a cam mechanism 152 for locking which is provided under the stepped portion 140 and is equivalent to a lock. As shown in Fig. 7, the key mechanism 150 includes an engaging groove 154 formed on rear side of the front wall 68, and a plate spring 156 is fixed to this engaging groove 154. Then a U-shaped hook pin 158 is energized elastically to the cam mechanism 152 by the plate spring 156, and further a holder 159 fixes the top end of the hook pin 158 and supports the bottom end thereof in a manner capable of swinging.

As shown in Fig. 8, the cam mechanism 152 for locking includes a heart-shaped groove 160 which is a little wider than the thickness of the above-described hook pin 158 and is formed in a heart-shape as a whole at somewhat upper portion from the center thereof. An engaging protrusion 162 is formed by an island portion surrounded by this heart-shaped groove 160, and a groove 164 extending downward from the bottom end of the heart-

shaped groove 160 is formed, and a trumpet-shaped groove 166 is formed further under the groove 164.

In loading the cartridge 10, the cartridge 10 is inserted into the tray 94, and thereafter this tray 94 is pressed down against the spring force of the coil springs 136 (Fig. 4). At this time, since the top end of the hook pin 158 is fixedly supported by the holder 149, the cam mechanism 152 for locking is guided by the bottom end of the hook pin 158 and the trumpet-shaped groove 166, the groove 164 and the heart-shaped groove 160 at the rightside of the engaging protrusion 162. Accordingly, the bottom end of the hook pin 158 is brought to the position shown by a point PI in Fig. 8. This means that the cam mechanism 152 depicts a locus as shown by a dash-dot line in Fig. 8 by the movement of the bottom end of the hook pin 158 in the heart-shaped groove 160. Accordingly, the bottom end of the hook pin 158 comes to the position shown by the point PI. Thereafter, by weakening the downward pressing force against the tray 94, this tray 94 is restored upward by the elastic force of the coil springs 136 (Fig. 4). Then, the bottom end of the hook pin 158 engages with the U-shaped concave portion at the upper side of the engaging protrusion 162, that is, the portion as shown by a point P2 in Fig. 8. Thereby the tray 94 is put in the locked state. In this state, the tray 94 holds the downward-pressed state.

On the other hand, when the cartridge 10 is to be removed, the tray 94 is pressed downward again. Then, a point P3 of the heart-shaped groove 160 reaches the bottom end of the hook pin 158, and with weakening the downward pressing force against the tray 94, the bottom end of the hook pin 158 moves along the heart-shaped groove 160 at the left side of the engaging protrusions 162, the groove 164 and the trumpet-shaped groove 166, being brought to the bottom end of this trumpet-shaped groove 166. That is, the bottom end of the hook pin 158 moves so as to depict a locus as shown by a dotted line in Fig. 8, and the locked state of the tray 94 is released.

As described above, the cam-system locking mechanism 148 of this embodiment first locks the tray 94 at the position of the frame 66 by pressing-down the tray 94, and this locking is released by a second pressing, and therefore it is not required to install an additional ejecting mechanism. Accordingly, the configuration of the locking mechanism 148 of the tray 94 can be simplified and miniaturized. However, it is needless to say that the configuration may be made in a manner that such a locking mechanism is constituted with a lever or the like, and locking by this lever can be released in interlocking with an operation of an eject button (not illustrated).

As shown in Fig. 4, the opening I70 of the edge connector 78 is engaged with the opening 80 at the front end of the frame 66 in the direction of insertion of the cartridge I0. This edge connector 78 has a U-shaped side face and includes a case I68 being long sideways when viewed from the front. On the front face of the case I68, the above-described two openings I70 and I72 are formed up and down with an interval kept inbetween.The printed circuit board 20 and the edge portion of a printed circuit board I82 are inserted into these openings I70 and I72, being connected to the connecting electrodes, respectively.

To be further detailed, as shown in Fig. 9, the front end of the upper side of the case I68 protrudes forward beyond the front end of the lower side thereof, and accordingly the opening I70 is positioned forward beyond the opening I72. Then, the printed circuit board 20 of the cartridge I0 is inserted obliquely into the opening I70. This means that the tip of an upper open end I68a of the case I68 is bent inward in an oblique fashion. On the other hand, the tip of a lower open end I68b of the base I68 is bent nearly horizontally.

A number of pairs of spring electrodes I78 and I80 are accommodated in the case I68. A plurality of pairs of these spring electrodes I78 and I80 are arranged in the direction of width of the edge connector 78 with constant intervals kept inbetween. To dispose the spring electrodes I78 and I80 with constant intervals kept in such a manner, grooves or partitions may be formed on the inner face of the case I68. Then, the respective lower open ends of the spring electrodes I78 and I80 are bent in a V-shape, being formed as contacting portions I78b and I80b which are faced each other.

The upper open end of the spring electrode I78 is bent in a V-shape to form the contacting portion I78a, and the upper open end of the spring electrode I80 is bent outward in a V-shape in the vicinity of the opening I70 and further the tip is bent back in a V-shape, and thereby the contacting portion I80a is formed. The contacting portion I80a and the contacting portion I78a are positioned so as to be shifted from each other in the direction of insertion of the cartridge I0, and when viewed in the direction of insertion of the cartridge I0 (from obliquely above), an interval nearly equal to or a little larger than the thickness of the printed circuit board 20 is kept between the both. Then, a stopper protrusion I84 for defining the insertion depth of the printed circuit board 20 is formed under the contacting portion I78a. The reason why the contacting portions I78a and I80a are disposed with an interval kept in the direction of insertion of the cartridge is that the printed circuit board 20, i.e., the cartridge I0 is inserted until the tip portion 20a (Fig. 2) of the printed circuit board 20 of the cartridge I0 strikes

against the stopper protrusion I84, and thereafter the rear end of the printed circuit board 20 is pressed downward with the contact portion I80a which acts as a fulcrum to the position where the printed circuit board 20 becomes parallel with the printed circuit board I82, and thereby the printed circuit board 20 can be loaded easily. This downward pressing of the printed circuit board 20 is achieved by the downward rotation of the tray 94 as described above.

When a game is played using the gaming machine main unit 42 (Fig. 3), first the external terminal 58 for sound and the external terminal 60 for video are connected to the CRT I96 (Fig. I0) such as a home TV set. Thereafter, the lid 46 is opened, and the cartridge I0 is inserted into the tray 94 so that the lower half I4 thereof becomes the down side (Fig. 7). At this time, the stepped portions 22 of the cartridge 20 engage with the stepped portions II8 and I20 of the tray 94, and the amount of insertion of the cartridge I0 is defined. Then, the upper opening I70 of the case I68 of the edge connector 78, that is, the whole of the upper open end I68a fits into the opening I8 (Fig. IA) of the case I2 of the cartridge I0. In this state, as shown in Fig. 9, the printed circuit board 20 of the cartridge I0 has an inclination of predetermined angle, for example, about I0 degrees in comparison with the normally loaded state, that is, the state that it becomes parallel with the printed circuit board I82 of the gaming machine main unit 42, and therefore the spring electrodes I78 are not in perfect contact with the conductive patterns 30, 30, --- (Fig. 2) of the printed circuit board 20.

Subsequently,the cartridge I0, that is, the tray 94 is pressed downward from above. At this time, when a cartridge having a predetermined shape, that is, an authentic cartridge is inserted, the tray 94 is pressed downward, and the locking mechanism I48 locks the tray 94 while holding the same in the horizontal state. Accordingly, the conductive patterns of the printed circuit board 20 are bought in press-contact with the corresponding spring electrodes I78 in the upper opening I70 of the edge connector 78, and they are put in the state of perfect contact, being connected electrically. Thereafter, the lid 46 (Fig. 3) is closed and the game can be played using the controllers I94a and I94b (Fig. I0).

If any cartridge wherein the concave portion 26 (Fig. IB) is not formed, that is, forged cartridge is inserted into the tray 94, the tray 94 cannot be pressed down because the cylindrical protrusion I44 (Fig. 6) strikes against the rear face of the cartridge.

In reference to Fig. I0, to the gaming machine main unit 42, the controllers I94a and I94b are connected through the jacks 48 and 50 and the

CRT 196 is connected through the external terminals 58 and 60 (Fig. 3). Also, the printed circuit board 182 connected by contacting portions 178b and 180b of the above-described edge connector 78 is accommodated in the gaming machine main unit 42. A game microprocessor 198 is mounted on the printed circuit board 182, and the above-described controllers 194a and 194b and the CRT 196 are connected to this microprocessor 198 through an I/0 interface 206. A PPU (picture processing unit) 200, a microprocessor 202 for determining authenticity and a clock oscillator 204 are further connected to the printed circuit board 182. The PPU 200 is composed, for example, of the IC "2C03" manufactured by Nintendo and outputs image information processed by the microprocessor 198 for game as a video signal for the CRT 196.

The microprocessor 202 for determining authenticity is composed, for example, of a four-bit microprocessor like the microprocessor for determining authenticity 36 mounted on the printed circuit board 20 of the cartridge 10. The reset switch 56 is connected to the microprocessor 202. A reset condenser 56a is further connected to the reset terminal of the microprocessor 202 in parallel with the reset switch 56. This reset condenser 56a is charged when the power switch 52 (Fig. 3) is turned on, thereby performing so-called initial reset (power on clear) that holds the microprocessor 202 in the reset state for a predetermined time.

As described above, the ROM 32 for storing a program and the ROM 34 for generating character information are mounted on the printed circuit board 20 of the cartridge 10. Then, as shown in Fig. 9, the printed circuit board 20 of the cartridge 10 and printed circuit board 182 of the gaming machine main unit 42 are connected electrically by the edge connector 78. Then, a clock signal from the clock oscillator 204 is given also to the microprocessor for determining authenticity 36 mounted on the printed circuit board 20 of the cartridge 10 through the edge connector 78, that is, the contacting portions 178b, 180b, 178a and 180a.

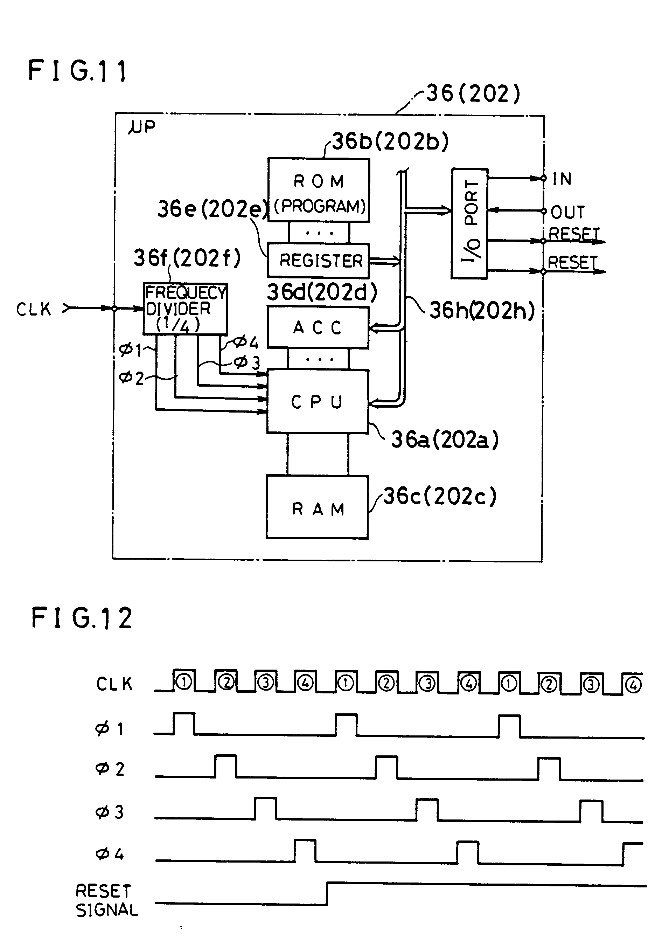

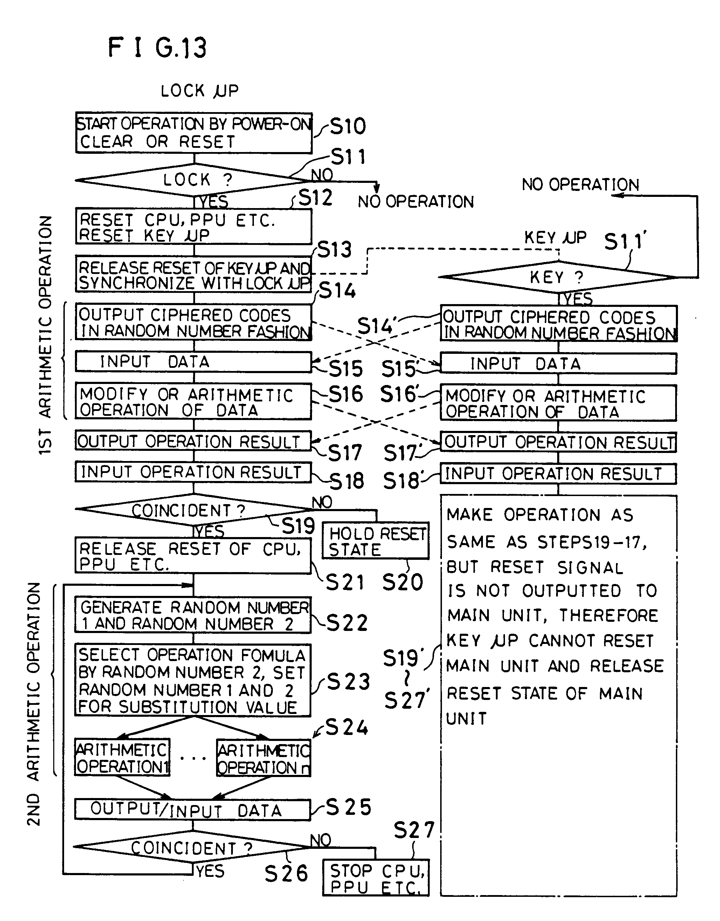

Next further detailed description is made on the microprocessor 36 for determining authenticity in reference to Fig. 11. In addition, the microprocessor 202 of the gaming machine main unit side is of a similar configuration, and therefore in Fig. 11, reference symbols relating thereto are shown in parentheses, and duplicate description is omitted here.

As described above, the microprocessors 36 and 202 determine whether the cartridge 10 is authentic or forged in cooperation with each other. The functions of these two microprocessors 36 and 202 can be compared to the so-called relation between a key and a lock. Accordingly, in the following description, the microprocessor 36 is referred to as the key microprocessor and the microprocessor 202 is referred to as the lock microprocessor.

As shown in Fig. 10, a predetermined terminal of the lock microprocessor 202 is grounded, while a predetermined terminal of the key microprocessor 36 is connected to a power source Vcc. Thereby, the microprocessors 36 and 202 can determine whether they themselves function as a key or a lock.

In the key microprocessor 36 and the lock microprocessor 202, corresponding terminals I, O and R are connected respectively through the edge connector 78 to give and receive data therebetween. Also, as described above, a clock signal CLK from the common clock oscillator 204 is given to these two microprocessors 36 and 202. The microprocessors 36 and 202 operate in the state that respective operation periods and phases are perfectly synchronized.

In reference to Fig. 11, the key microprocessor 36 is, for example, of four-bit configuration, and this microprocessor 36 comprises a CPU 36a as data processing means, a ROM 36b as a semiconductor memory, and a RAM 36c for storing various data required for data processing of the CPU 36a. The ROM 36b stores operation programs of the CPU 36a, and these operation programs comprise two arithmetic operation programs. One of the arithmetic operation programs contains a plurality of kinds of arithmetic operation formulas and data of random numbers for arithmetic operation. Also, the operation programs contains a determining program for comparing and checking the result of operation of the other arithmetic operation program against that of the lock microprocessor 202 and a determining program of one arithmetic operation against that of the key microprocessor 36. When these determining programs are executed, the CPU 36a functions as determining means.

Furthermore, the operation programs contain a controlling program for controlling reset or release of reset state of the gaming machine main unit 42 based on the result of determination by the above-described determining program.

An accumulator 36d is connected to the CPU 36a. On the other hand, a register 36e is connected to the ROM 36b. The register 36e is for temporarily storing the program data accessed from the ROM 36b. The CPU 36a, the accumulator 36d and the register 36e are connected by a data bus 36h. This data bus 36h is connected to an I/O port 36g. Through this I/O port 36g, data is outputted to the lock microprocessor 202, and data from that microprocessor 202 is received.

Furthermore, in the key microprocessor 36, a frequency divider 36f for receiving the clock signal CLK from the clock oscillator 204 (Fig. 10) and for

frequency dividing the same is installed, and the frequency dividing ratio of the frequency divider 36f is selected, for example, at one-fourth.

Next, brief description is made on operation of the frequency divider 36f in reference to a timing chart in Fig. I2. As described above, the frequency divider 36f makes I/4 frequency-division of the clock signal CLK from the clock oscillator 204. Accordingly, four signals having different phases $\phi$I, $\phi$2, $\phi$3 and $\phi$4 are obtained from the frequency divider 36f. These signals $\phi$I - $\phi$4 are given to the CPU 36a. The CPU 36a performs predetermined operations in sequence in synchronism with these four signals $\phi$I - $\phi$4. For example, it reads data from the I/O port 36g in synchronism with the signal $\phi$I, performs a predetermined arithmetic operation processing (data processing) in synchronism with the signals $\phi$2 and $\phi$3, and outputs data from the I/O port 36g in synchronism with the final signal $\phi$4.

In addition, these signals $\phi$I - $\phi$4 are given also to the lock microprocessor 202, and accordingly the two microprocessors 36 and 202 operate in perfect synchronism. More specifically, for the key microprocessor 36 and the lock microprocessor 202, the numbers of steps of operation programs and the architectures are the same and the hardwares and clock signals thereof are also quite the same, and therefore respective machine cycles coincide completely.

In reference to Fig. I3, after the cartridge I0 is loaded in the gaming machine main unit 42, when the power switch 52 (Fig. 3) of the main unit 42 is turned on or the reset switch 56 is turned on, a reset operation of the lock microprocessor 202 is performed, and in step SI0, this lock microprocessor 202 starts to operate.

In the following step SII, the lock microprocessor 202 determines whether it is to function as a lock or to function as a key. As explained with reference to Fig. I0, this determination is made by determining whether the predetermined terminal is grounded or connected to the power source. In this case, the microprocessor lock 202 should determine that it is to function as a lock, but when it determines that it is to function as a key, for example, due to wrong wiring, malfunction or the like, it is put in the unstable state, not performing any operation.

When "YES" is determined in step SII, in step SI2, the lock microprocessor 202 resets each circuit so that the gaming machine main unit 42 does not execute the game program, and this reset state is continued. More specifically, the CPU I98 and the PPU 200 (Fig. I0) are put forcedly in the reset state and disabled until the reset is released in step S2I as described later. Also, in this step SI2, the key microprocessor 36 is reset.

In the following step SI3, the lock microprocessor 202 releases the reset of the key microprocessor 36, and synchronizes the two microprocessors 36 and 202. More specifically, the machine cycle of the lock microprocessor 202 is set so that the reset signal given to the key microprocessor 36 from the lock microprocessor 202 is outputted between a signal of a specific period of the clock signal CLK, for example, $\phi$4 and the signal $\phi$I of the next period. Consequently, the key microprocessor 36 is sure to start operation with that signal $\phi$I. Accordingly, the key microprocessor 36 starts operation with quite the same machine cycle as that of the lock microprocessor 202, thereby, the two microprocessors 36 and 202 are synchronized, and thereafter the respective microprocessors perform operations in th perfectly synchronized state.

When the reset of the key microprocessor 36 is released in step SI3, the key microprocessor 36 determines whether it itself is to function as a lock or a key in the next step SII$'$. The determination in this step SII$'$ is made by determining whether the predetermined terminal of the key microprocessor 36 is grounded or connected to the power source likewise the above-described determination in step SII. When "NO" is determined in this step SII$'$, an unstable state takes place and no operations are performed at all.

Also, when "YES" is determined in step SII$'$, operations in step SI4$'$ and following steps are executed.

On the other hand, the lock microprocessor 202 executes step SI3 and thereafter executes operations in step SI4 and following steps. Thereafter, in the lock microprocessor 202 and the key microprocessor 36, quite the same operations can be performed in synchronism, that is, in coincidence in the time axis.

First, in Step SI4$'$; the lock microprocessor 202 and the key microprocessor 36 output ciphered codes in a random number fashion from respective program ROMs 202b and 36b (Fig. II) (steps SI4 and SI4$'$). These outputs of ciphered codes are performed using quite the same random function. Then, conditions given to the random function are the same for the two microprocessors 36 and 202. Accordingly, when the cartridge is authentic, the ciphered codes generated in the key microprocessor 36 become quite the same.

Next, in steps SI5 and SI5$'$, the lock microprocessor 202 and the key microprocessor 36 exchange data and receive the ciphered codes generated by the counterportion, respectively. Then, in steps SI6 and SI6$'$, the both perform predetermined data processings based on the ciphered codes inputted from the counterportions. Arithmetic operation formulas used for these arithmetic operation processings are quite the same in the two microprocessors 36 and 202, and therefore when the inputted ciphered codes are the same, the results of these arithmetic operations also become the same. Then, in steps SI7 and SI7′, the lock microprocessor 202 and the key microprocessor 36 send the result of arithmetic operation to the counterportion, respectively. Responsively, in steps SI8 and SI8′, the two microprocessors 36 and 202 receive the result of arithmetic operation inputted from the counterportion, respectively. Here, since the key microprocessor 36 and the lock microprocessor 202 perform quite the same operation at the same timing, the results of arithmetic operations inputted from the counterportion are to be inputted at the same timing. Accordingly, in this embodiment, not only coincidence in the result of arithmetic operation but also coincidence in the time axis are taken into consideration to determine whether or not the cartridge is authentic.

Next, in step SI8, the lock microprocessor 202 compares and checks the result of arithmetic operation done by itself against the result of arithmetic operation given from the key microprocessor 36, determining whether or not the both coincide with each other. As a result of this check, if "NO" is determined, the lock microprocessor 202 holds the reset state of each circuit in the gaming machine main unit 42, namely, the CPU I98, the PPU 200 and the like in the next step S20. Thereby, the gaming machine main unit 42 is inhibited to execute the game program.

In addition, in place of such a holding of the reset state, an alarm may be raised in response to a determination of non-coincidence, or processing may be returned to the initial state, namely, step SII.

As a result of checking in step S19, if "YES" is determined, the lock microprocessor 202 releases the reset state of these circuits, that is, the CPU I98, the PPU 200 and the like in the next step S2I.

Subsequently, in step S2I, the lock microprocessor 202 generates two, a first and a second, data of random numbers based on a predetermined random function. Then, in step S23, the lock microprocessor 202 selects the kind of arithmetic operation formula by the second data of random numbers, and sets the first and the second data of random numbers as values to be substituted into the selected arithmetic operation formula. More specifically, in this embodiment, n (positive integer) kinds of arithmetic operation formulas are set in advance as the second arithmetic operation processing (data processing) in the arithmetic operation program and an arithmetic operation formula is selected from among them in response to the second data of random numbers. Next, in step S24, arithmetic operation by the first and the second data of random numbers is executed based on the selected arithmetic operation formula. These operations in steps SI9 - S24 are performed also in the key microprocessor 36 in the same manner at quite the same timing. Then, the random function for generating the first and the second data of random numbers employed here is also the same as that employed in the lock microprocessor 202. Then, conditions given to the random function for generating the first and the second data of random numbers are quite the same for the lock microprocessor 202 and the key microprocessor 36. Accordingly, if the cartridge I0 is applicable to the main unit 42, in the two microprocessors 36 and 202, quite the same arithmetic operation formula is selected, and the results of the arithmetic operation also become the same.

Next, in step S25, the lock microprocessor 202 gives the result of arithmetic operation performed in step S24 to the key microprocessor 36, and receives the result of arithmetic operation by the key microprocessor 36. The same operation is performed also in the key microprocessor 36.

Next, in step S26, the lock microprocessor 202 compares and checks the result of arithmetic operation by itself against the result of the arithmetic operation received from the key microprocessor 36, and determines whether or not the both coincide with each other.

If the cartridge I0 loaded in the gaming machine main unit 42 is not authentic, the result of arithmetic operation by the both do not coincide, and therefore the lock microprocessor 202 forcedly puts the CPU I98, the PPU 200 and the like in the reset state so as to stop the following operations in step S27.

On the other hand, in the lock microprocessor 202, when the result of arithmetic operation by itself and the result of arithmetic operation received from the key microprocessor 36 coincide with each other, processing returns again to step S22, thereafter repeating the operations in steps S22 - S26. This means that, in this embodiment, the second arithmetic operation program is executed as long as the gaming machine main unit 42 operates, and if a non-coincidence takes place even once during operations, the step S27 is executed, and operations of the CPU I98 and the PPU 200 are stopped. Thereby, execution of the game program in the main unit 42 is inhibited.

Meanwhile, the same operations as in step S26 and S27 are performed also in the key microprocessor 36. However, the key microprocessor 36 gives no effect on reset and release of reset of each circuit of the gaming machine main unit 42.

Also, for the operation of the key microprocessor 36, since terminals for chip selection are installed normally in the ROMs 32 and 34, it is also possible that these terminals for chip selection are disabled and thereby the microprocessor 198 and the PPU 200 of the gaming machine main unit 42 side are made inaccessible.

Although a sufficient determination on authenticity can be made by checking the result of the first arithmetic operation in step S19, in the above-described embodiment, the second arithmetic operation and checking of the result thereof are further performed in steps S22 - S26 all the time as long as the gaming machine main unit 42 operates, and therefore the determination on whether or not the cartridge 10 is authentic an be made nearly completely. Accordingly, when any cartridge which copies the ROMs 32 and 34 in the cartridge 10 or comprises ROMs storing programs similar thereto is used, such a protection for software cannot be broken unless a hardware quite the same as the key microprocessor 36 is obtained. Also, by using custom ICs as the key microprocessor 36 and the lock microprocessor 202, such a protection can be made more completely.

Thus, the microprocessor 36 for determining authenticity is installed in the cartridge 10, and by cooperation of the microprocessor 202 of the gaming machine main unit 42 therewith, the protection of software of the cartridge 10 can be made completely, and accordingly use of any copies or forged cartridge, that is, any cartridge other than the authentic one is excluded.

In accordance with the present invention, by means of a peculiar shape of the cartridge 10 and by the data processing means accommodated in the cartridge 10, whether or not the cartridge is authentic can be determined perfectly, and thereby use of any cartridge other than the authentic one can be excluded.

In addition, the cartridge 10 is applicable also to gaming machines wherein the inserting port is adaptable to the cartridge 10 and the cartridge is inserted from the upper portion of the main unit, not limited to the gaming machine of front loading system as shown in Fig. 4 - Fig. 7.

Fig. 14 is an exploded perspective view of an embodiment not in accordance with the present invention as viewed from the rear face thereof. The cartridge 10′ of this embodiment differs from the embodiment shown in Fig. 1A through Fig. 2 in the following points, in order to make the same easy. More specifically, in the opening 18 of the upper half 16, a partitioning plate 210 having a notched portion 208 into which the tip 20a of the printed circuit board 20 is engaged is formed, in the vicinity of the both sides of the portionitioning plates 210, there are formed protrusion 212 and 214 for positioning. These positioning protrusions 212 and 214 are formed in L-shape or step-shape correspondingly to the form of the both sides of the printed circuit board 20. The form and the position of the right and left sides of the positioning protrusions 212 and 214 are different from each other, thereby positioning of the printed circuit board 20 in the case 12 becomes easy, and therefore, it is prevented that the surface and the rear face of the printed circuit board 20 are mounted in reverse in the case 12.

Meanwhile, instead of the single printed circuit board unit 20, a printed circuit board unit 20′ may be used, which includes a first printed circuit board 216, a second printed circuit board 218 and a double edge connector 220 for interconnecting the both printed circuit boards 216 and 218. The reason why such printed circuit board unit 20′ is used is to make the printed circuit board 218 having no key microprocessor 36 be applicable to the gaming machine main unit 42 of the embodiment shown, or to provide a cartridge 10′ having changeability or convertibility wherein the printed circuit board 218 for another kind of game and having the number of connecting electrodes different from that of the edge connector 78. In this case, the number of the connecting electrodes formed on the tip 20a of the first printed circuit board 216 is selected equal to the numberof the connecting electrodes of the printed circuit board 20 of the above described embodiment and, the number of the connecting electrodes formed at the rear end of the first printed circuit board 216 is selected equal to the number of the connecting electrodes of the second circuit board 218, further the key microprocessor 36 is mounted on the first printed circuit board 216. Then, the rear end of the first printed circuit board 216 is inserted into one insertion part of the double edge connector 220 and, into the other insertion part of the double edge connector 220, the second printed circuit board 218 is inserted.

At the both right and left sides of the double edge connector 220, a mounting piece 224 having a mounting hole is formed. The ROMS32 and 34 are mounted on the second printed circuit board 218. In the center of the second printed circuit board 218, a hole 226 is formed and, a hole 228 is formed at the position sifted from the hole 226.

On the other hand, in the case where the printed circuit board unit 20′ is used, mounting posts 230 and 232 having a threaded hole are formed on the upper half 16, a positioning post 234 is also formed on the same. On an outer periphery of the mounting post 232, a fin-shaped protrusion 236 is formed below the position corresponding to the thickness of the second printed circuit board 218. Therefore, it is made easy to mount the printed circuit board unit 20′ and, it is prevented that the surface and rear face of the unit 20′ are mounted in reverse. Further, by such structure, it is possible to secure stably the printed circuit board unit 20′ to the case 12.

Although the present invention has been described and illustrated in detail, it is clearly understood that the same is by way of illustration and example only and is not to be taken by way of limitation, the spirit and scope of the present invention being limited only by the terms of the appended claims.

**Claims**

1. An electronic gaming machine comprising in combination:

   (a) a memory cartridge (10) having a case which includes a contacting portion adapted to be inserted into a front loading apparatus, upper and lower faces each adjoining the contacting portion, and lying in substantially parallel planes,

   a side surface adjoining the upper and lower surfaces and the contacting portion and including a tapered surface portion (28) cooperating with said front loading apparatus to prevent an inverted insertion of the cartridge therein,

   an opposite side surface, also adjoining the upper and lower faces and the contacting portion, and having an edge portion with a configuration in cross section, which when inverted, is different from the corresponding cross sectional shape of the other side surface,

   a printed circuit board (20) accommodated in said case,

   game information generating means (32,34) mounted on said printed circuit board for generating information for a game,

   a first semiconductor memory (36b) mounted on said printed circuit board for storing a program for determining authenticity of the cartridge,

   first data processing means (36) for executing the program stored in said first semiconductor memory, and

   (b) a gaming machine main unit (42) comprising:

   a cartridge receiving portion (94) for receiving said cartridge including a guide (110) having a contacting surface disposed therein and cooperating with said chamfered surface portion to prevent an inverted insertion of the cartridge,

   display signal generating means (198,200) for generating a display signal for an image displaying means (196) based on the game information from said information generating means,

   a second semiconductor memory (202b) associated with said first semiconductor memory for storing a program for determining authenticity of said cartridge, and

   second data processing means (202) having the same operating characteristics as those of said first data processing means for executing the program stored in said second semiconductor memory.

2. An electronic gaming machine in accordance with claim 1, further including disabling means (R) for disabling the gaming machine in response to at least one of outputs of said first and second data processing means (36,202).

3. An electronic gaming machine in accordance with claim 2, further including controlling means (194a,194b) for controlling a game, and wherein said disabling means (R) is capable of disabling said controlling means.

4. An electronic gaming machine in accordance with claim 3, wherein said disabling means (R) includes means for disabling access of said controlling means (194a, 194b) to said first semiconductor memory (36b).

5. An electronic gaming apparatus comprising:

   a gaming machine main control unit (42);

   a frame structure mounted to the main control unit;

   a cartridge tray (94) pivotally mounted to said frame structure for rotation within a predetermined angular range between a loading and an operating position;

   biasing means (136) biasing said cartridge tray toward the loading position;

   means (148) for releasably locking said cartridge tray in the operation position;

   a memory cartridge (10) for operation with said main control unit and being adapted to be slideably inserted into said cartridge tray when in its loading position, said memory cartridge including a case (12) having a bottom surface, said bottom surface having a concave portion (26) therein, a tapered portion (28) included in a side surface of the case, and an edge portion (22) included in an opposite side surface of the case and having a shape different from said tapered surface portion; and

   security means for preventing the use of an unauthorized cartridge in said gaming machine main control unit, said security means including a protrusion (144) extending upward from said frame structure and positioned such that as said cartridge tray is rotated toward the operating position, the protrusion enters said concave portion on said cartridge and allows said cartridge tray to assume the operating position, said security means further including substantially identical first and second data processing devices (36, 202) mounted in said memory cartridge and said main control unit, respectively, for executing the same predetermined authenticating program to determine authenticity of said cartridge, and determining means (36a) responsive to at least one of said first and second data processing devices for disabling operation of said main control unit in accordance with the execution of said authenticating program.

6. An electronic gaming apparatus according to claim 5, wherein said memory cartridge (10) comprises a ROM memory device (36b) mounted within said case along with said first data processing device (36) for storing said predetermined authenticating program.

7. An electronic gaming apparatus according to claim 5 or claim 6,

   wherein the cartridge tray (94) has a bottom plate (104), side walls (106,108) and protruding bars (110,112) fixed to the junction corner portions formed by the bottom plate and the side walls wherein the protruding bars are of triangular cross-section;

   said memory cartridge including a printed circuit board (20) mounted in said case and having exposed edge terminals (30) at one end of said case;

   game information generating means (32,34) mounted on said printed circuit board for generating information required for a game;

   said memory cartridge further having a tapered surface portion (28) corresponding to the inclination of the protruding bars with respect to the bottom plate to prevent an inverted insertion of the cartridge in said cartridge tray, and an edge portion formed in said side surface and having a shape different from said tapered surface portion.

**Revendications**

1. Machine de jeu électronique caractérisée en ce qu'elle comprend en combinaison :

   (a) une cassette à mémoire (10) comportant une boîte comprenant une partie de contact destinée à être introduite dans un appareil à chargement avant, ainsi qu'une face supérieure et une face inférieure attenante chacune à la partie de contact et se situant dans des plans sensiblement parallèles,

   une surface latérale attenante à la surface supérieure, à la surface inférieure et à la partie de contact, cette surface latérale comprenant une partie de surface amincie (28) coopérant avec l'appareil à chargement avant pour éviter qu'on introduise la cassette à l'envers dans celui-ci,

   une surface latérale opposée également attenante à la face supérieure, à la face inférieure et à la partie de contact, cette surface latérale opposée comportant une partie de bord présentant, en section transversale, une configuration qui, lorsqu'elle est inversée, est différente de la forme de section transversale correspondante de l'autre surface latérale,

   une carte de circuit imprimé (20) logée dans la boîte,

   des moyens de production d'informations de jeu (32, 34) montés sur la carte de circuit imprimé pour gérérer une information de jeu,

   une première mémoire à semi-conducteur (36b) montée sur la carte de circuit imprimé pour stocker un programme permettant de déterminer l'authenticité de la cassette,

   des premiers moyens de traitement de données (36) destinés à exécuter le programme stocké dans la première mémoire à semi-conducteur, et

   (b) un bloc principal (42) de la machine de jeu, comprenant :

   une partie de réception de cassette (94) destinée à recevoir la cassette et comprenant un guide (110) muni d'une surface de contact disposée dans celui-ci et coopérant avec la partie de surface amincie pour éviter une introduction à l'envers de la cassette,

   des moyens de production d'un signal d'affichage (198, 200) destinés à générer un signal d'affichage pour un dispositif d'affichage d'image (196) sur la base de l'information de jeu provenant des moyens de production d'information,

   une seconde mémoire à semi-conducteur (202b) associée à la première mémoire à semi-conducteur pour stocker un programme permettant de déterminer l'authenticité de la cassette, et

   des seconds moyens de traitement de données (202) présentant les mêmes caractéristiques de fonctionnement que celles des premiers moyens de traitement de données pour exécuter le programme stocké dans la seconde mémoire à semi-conducteur.

**2.** Machine de jeu électronique selon la revendication 1, caractérisée en ce qu'elle comprend en outre des moyens (R) de mise hors service de la machine de jeu en réponse à l'une au moins des sorties des premiers et seconds moyens de traitement de données (36, 202).

**3.** Machine de jeu électronique selon la revendication 2, caractérisée en ce qu'elle comprend en outre des moyens de commande (194a, 194b) destinés à commander un jeu, et en ce que les moyens (R) de mise hors service sont capables de mettre hors service ces moyens de commande.

**4.** Machine de jeu électronique selon la revendication 3, caractérisée en ce que les moyens (R) de mise hors service comprennent des moyens permettant de mettre hors service l'accès des moyens de commande (194a, 194b) à la première mémoire à semi-conducteur (36b).

**5.** Appareil de jeu électronique caractérisé en ce qu'il comprend :

un bloc principal (42) de la machine de jeu;

une structure de châssis montée sur le bloc de commande principal;

un casier de cassette (94) monté en pivotement sur la structure de châssis pour pouvoir tourner à l'intérieur d'une plage angulaire prédéterminée entre une position de chargement et une position de fonctionnement;

des moyens de poussée (136) poussant le casier de cassette vers la position de chargement;

des moyens (148) destinés à verrouiller de façon libérable le casier de cassette dans la position de fonctionnement;

une cassette à mémoire (10) destinée à fonctionner avec le bloc de commande principal et conçue pour pouvoir être introduite en glissement dans le casier de cassette lorsque celui-ci se trouve dans sa position de chargement, cette cassette à mémoire comprenant une boîte (12) comportant une surface inférieure munie d'une partie concave (26) à l'intérieur de celle-ci, une partie amincie (28) comprise dans une surface latérale de la boîte, et une partie de bord (22) comprise dans une surface latérale opposée de la boîte et présentant une forme différente de celle de la partie de surface amincie; et

des moyens de sécurité destinés à empêcher l'utilisation d'une cassette interdite dans le bloc de commande principal de la machine de jeu, ces moyens de sécurité comprenant une protubérance (144) faisant saillie vers le haut à partir de la structure de châssis et placée de façon que, lorsqu'on fait tourner le casier de cassette vers la position de fonctionnement, la protubérance pénètre dans la partie concave de la cassette et permette au casier de cassette de prendre la position de fonctionnement, ces moyens de sécurité comprenant en outre un premier dispositif de traitement de données et un second dispositif de traitement de données essentiellement identiques (36, 202) montés respectivement dans la cassette à mémoire et dans le bloc de commande principal pour exécuter le même programme d'authentification prédéterminé de manière à déterminer l'authenticité de la cassette, et des moyens de détermination (36a) répondant à l'un au moins des premiers et seconds dispositifs de traitement de données pour mettre hors service le fonctionnement du bloc de commande principal conformément à l'exécution du programme d'authentification.

**6.** Appareil de jeu électronique selon la revendication 5, caractérisé en ce que la cassette à mémoire (10) comprend un dispositif de mémoire morte (ROM) (36b) monté à l'intérieur de la boîte an même temps que le premier dispositif de traitement de données (36) pour stocker le programme d'authentification prédéterminé.

**7.** Appareil de jeu électronique selon l'une quelconque des revendications 5 et 6, caractérisé en ce que le casier de cassette (94) comporte une plaque de fond (104), des parois latérales (106, 108) et des barres en saillie (110, 112) fixées aux parties de coins de jonction formées par la plaque de fond et les parois latérales, les barres en saillie présentant une section transversale triangulaire;

la cassette à mémoire comprenant une carte de circuit imprimé (20) montée dans la boîte et comportant des bornes de bord exposées (30) à une extrémité de la boîte;

des moyens de production d'informations de jeu (32, 34) étant montés sur la carte de circuit imprimé pour générer l'information nécessaire à un jeu;

la cassette à mémoire comportant en outre une partie de surface amincie (28) correspondant à l'inclinaison des barres en saillie par rapport à la plaque de fond de manière à éviter une introduction à l'envers de la cassette dans le casier de cassette, et une partie de bord formée dans la surface latérale et présentant une forme différente de celle de la partie de surface amincie.

**Patentansprüche**

1. Elektronische Spielmaschine, die in Kombination aufweist:

(a) eine Speicherkassette (10) mit einem Gehäuse, das einen für das Einsetzen in ein Frontladergerät angepaßten Kontaktierungsteil, Ober und Unterseiten, die jeweils an den Kontaktierungsteil angrenzen und in im wesentlichen parallelen Ebenen liegen,

eine Seitenfläche, die an die Ober- und Unterseite und an den Kontaktierungsteil angrenzt und einen sich verjüngenden Oberflächenteil (28) aufweist, der mit dem genannten Frontladergerät zusammenwirkt, um ein umgekehrtes Einsetzen der Kassette in dieses zu verhindern,

eine gegenüberliegende Seitenfläche, die ebenfalls an die Ober- und Unterseite und an den Kontaktierungsteil angrenzt und einen Randbereich mit einer Querschnittsform besitzt, die, wenn sie umgekehrt wird, zu der entsprechenden Querschnittsform der anderen Seitenfläche unterschiedlich ist,

eine Schaltungsplatte (20), die in dem genannten Gehäuse untergebracht ist,

ein Generierungsmittel (32, 34) für Spielinformationen, das an der genannten Schaltungsplatte angebracht ist, um die Informationen für ein Spiel zu erzeugen,

einen erten Halbleiterspeicher (36b), der an der genannten Schaltungsplatte angebracht ist, um ein Programm zur Ermittlung der Authentizität der Kassette zu speichern,

ein erstes Datenverarbeitungsmittel (36) zum Ausführen des im genannten ersten Halbleiterspeicher gespeicherten Programms und

(b) eine Spielmaschinen-Haupteinheit (42), die aufweist:

einen für die Aufnahme besagter Kassette dienenden Kassettenaufnahmeteil (94) mit einer Führung (110), die eine in ihr angeordnete Kontaktierfläche aufweist und mit dem genannten, sich verjüngenden Oberflächenteil zusammenwirkt, um ein umgekehrtes Einsetzen der Kassette zu verhindern,

ein Sichtanzeige-Signalerzeugungsmittel (198, 200), um aufgrund der Spielinformationen von dem genannten Informationsgenerierungsmittel ein Sichtanzeigesignal für ein bilddarstellendes Mittel (196) zu erzeugen,

einen zweiten Halbleiterspeicher (202b), der dem genannten ersten Halbleiterspeicher zugeordnet ist, um ein Programm für die Ermittlung der Authentizität der genannten Kassette zu speichern, und

ein zweites Datenverarbeitungsmittel (202), das die gleichen Betriebseigenschaften wie das genannte erste Datenverarbeitungsmittels besitzt, um das in dem genannten zweiten Halbleiterspeicher gespeicherte Programm auszuführen.

2. Elektronische Spielmaschine nach Anspruch 1, die außerdem Sperrmittel (R) aufweist, um die Spielmaschine aufgrund mindestens eines der Ausgangssignale der genannten ersten und zweiten Datenverarbeitungsmittel (36, 202) zu blockieren.

3. Elektronische Spielmaschine nach Anspruch 2, die außerdem ein Steuermittel (194a, 194b) für die Steuerung eines Spieles aufweist und bei der das genannte Sperrmittel (R) in der Lage ist, das genannte Steuermittel zu blockieren.

4. Elektronische Spielmaschine nach Anspruch 3, bei der das genannte Sperrmittel (R) ein Mittel aufweist, um den Zugriff des genannten Steuermittels (194a, 194b) auf den genannten ersten Halbleiterspeicher (36b) zu blockieren.

5. Elektronische Spielapparatur, die aufweist:

eine Spielmaschinen-Hauptsteuereinheit (42);

einen an der Hauptsteuereinheit angeordneten Rahmenaufbau;

einen Kassettentrog (94), der an dem genannten Rahmenaufbau für eine Drehbewegung innerhalb eines vorbestimmten Winkelbereichs zwischen einer Lade- und einer Betriebsstellung schwenkbar angeordnet ist;

ein Vorspannmittel (136), das den genannten Kassettentrog gegen die Ladestellung hin vorspannt;

ein Mittel (148) zum lösbaren Verriegeln des genannten Kassettentrogs in der Betriebsstellung;

eine Speicherkassette (10), die zum Betrieb mit der genannten Hauptsteuereinheit vorgesehen ist und durch Einschieben in den genannten Kassettentrog eingesetzt werden kann, wenn dieser in seiner Ladestellung ist, wobei die genannte Speicherkassette ein Gehäuse (12) mit einer Grundfläche aufweist, die in sich einen konkaven Teil (26) aufweist, wobei ein sich verjüngender Teil (28) in einer Seitenfläche des Gehäuses vorhanden ist und ein Randbereich (22) an einer gegenüberliegenden Seitenfläche des Gehäuses eine Formgebung besitzt, die zu dem genannten, sich verjüngenden Oberflächenteil unterschiedlich ist; und

ein Sicherheitsmittel zum Verhindern der Benutzung einer nicht autorisierten Kassette in der genannten Spielmaschinen-Hauptsteuereinheit, wobei das genannte Sicherheitsmittel einen Vorsprung (144) aufweist, der sich von dem genannten Rahmenaufbau nach oben erstreckt und in solcher Lage angeordnet ist, daß, wenn der genannte Kassettentrog in Richtung auf die Betriebsstellung gedreht wird, der Vorsprung in den genannten konkaven Teil der genannten Kassette eintritt und gestattet, daß der genannte Kassettentrog die Betriebsstellung einnimmt, wobei das Sicherheitsmittel außerdem im wesentlichen identische erste und zweite Datenverarbeitungsmittel (36, 202), die in der genannten Speicherkassette bzw. der genannten Hauptsteuereinheit angeordnet sind, um das gleiche vorbestimmte authentisierende Programm auszuführen, um die Authentizität der genannten Kassette zu ermitteln, und ein Determinatormittel (36a) aufweist, das auf zumindest eines der genannten ersten und zweiten Datenverarbeitungsmittel anspricht, um den Betrieb der genannten Hauptsteuereinheit entsprechend der Ausführung des genannten authentisierenden Programms zu blockieren.

6. Elektronische Spielapparatur nach Anspruch 5, bei der die genannte Speicherkassette (10) eine ROM-Speichereinrichtung (36b) aufweist, die zusammen mit dem genannten ersten Datenverarbeitungsmittel (36) innerhalb des genannten Gehäuses angeordnet ist, um das genannte, vorbestimmte, authentisierende Programm zu speichern.

7. Elektronische Spielapparatur nach Anspruch 5 oder Anspruch 6, bei der der Kassettentrog (94) eine Grundplatte (104), Seitenwände (106, 108) und vorstehende Leisten (110, 112) aufweist, die an den Eckbereichen befestigt sind, die durch die Verbindung zwischen Grundplatte und den Seitenwänden gebildet sind, wobei die vorstehenden Leisten einen dreieckigen Querschnitt besitzen;

die genannte Speicherkassette eine Schaltungsplatte (20) aufweist, die in dem genannten Gehäuse angeordnet ist und freiliegende Anschlußränder (30) am einen Ende des genannten Gehäuses besitzt;

ein Generierungsmittel (32, 34) zum Erzeugen von Spielinformationen, das an der genannten Schaltungsplatte angeordnet ist, um die für ein Spiel erforderlichen Informationen zu erzeugen;

wobei die genannte Speicherkassette außerdem einen sich verjüngenden Oberflächenteil (28) aufweist, der eine zu der Neigung der vorstehenden Leisten relativ zur Grundplatte entsprechende Ausbildung aufweist, um ein umgekehrtes Einsetzen der Kassette in den genannten Kassettentrog zu verhindern, und ein Randbereich in der genannten Seitenfläche ausgebildet ist und eine Formgebung besitzt, die zu dem genannten, sich verjüngenden Oberflächenteil unterschiedlich ist.

F I G. 1 A

F I G. 1 B

EP 0 217 668 B1

# F I G. 2

F I G. 3

F I G. 9

FIG.4

FIG. 5

FIG. 6

F I G. 7

F I G. 8

# F I G. 10

## F I G.11

## F I G.12

# F I G.13

LOCK ƯP

**1ST ARITHMETIC OPERATION**

```
┌─────────────────────────────┐
│ START OPERATION BY POWER-ON │  S10
│ CLEAR  OR  RESET            │
└─────────────────────────────┘
         ◇ LOCK ? ◇  NO          S11          NO OPERATION
              YES    S12   NO OPERATION
┌─────────────────────────────┐
│ RESET CPU, PPU ETC.         │
│ RESET KEY ƯP                │
└─────────────────────────────┘
                                   S13      KEY ƯP   S11'
┌─────────────────────────────┐
│ RELEASE RESET OF KEY ƯP AND │          ◇ KEY ? ◇
│ SYNCHRONIZE WITH LOCK ƯP    │ S14            YES
└─────────────────────────────┘
┌─────────────────────────────┐        ┌─────────────────────────────┐
│ OUTPUT CIPHERED CODES       │  S14'  │ OUTPUT CIPHERED CODES       │
│ IN RANDOM NUMBER FASHION    │        │ IN RANDOM NUMBER FASHION    │
└─────────────────────────────┘        └─────────────────────────────┘
┌─────────────────────────────┐ S15 S15'┌─────────────────────────────┐
│      INPUT   DATA           │        │      INPUT   DATA           │
└─────────────────────────────┘        └─────────────────────────────┘
┌─────────────────────────────┐ S16 S16'┌─────────────────────────────┐
│ MODIFY  OR  ARITHMETIC      │        │ MODIFY  OR  ARITHMETIC      │
│ OPERATION  OF  DATA         │        │ OPERATION OF  DATA          │
└─────────────────────────────┘        └─────────────────────────────┘
┌─────────────────────────────┐        ┌─────────────────────────────┐
│ OUTPUT OPERATION RESULT     │ S17 S17'│ OUTPUT OPERATION RESULT     │
└─────────────────────────────┘        └─────────────────────────────┘
┌─────────────────────────────┐ S18 S18'┌─────────────────────────────┐
│ INPUT OPERATION RESULT      │        │ INPUT OPERATION RESULT      │
└─────────────────────────────┘        └─────────────────────────────┘
```

◇ COINCIDENT ? ◇ NO    
YES    S19

┌─────────────────────────────┐
│ RELEASE  RESET  OF CPU,     │
│ PPU  ETC.                   │
└─────────────────────────────┘

S21  S20

┌──────────────┐
│ HOLD RESET   │
│ STATE        │
└──────────────┘

**2ND ARITHMETIC OPERATION**

```
┌─────────────────────────────┐
│ GENERATE RANDOM NUMBER      │  S22
│ 1 AND RANDOM NUMBER  2      │
└─────────────────────────────┘
┌─────────────────────────────┐
│ SELECT OPERATION FOMULA     │
│ BY RANDOM NUMBER 2, SET     │  S23
│ RANDOM NUMBER 1 AND  2      │
│ FOR SUBSTITUTION VALUE      │
└─────────────────────────────┘
                                   S24
┌──────────────┐     ┌──────────────┐
│ ARITHMETIC   │ ... │ ARITHMETIC   │
│ OPERATION1   │     │ OPERATION n  │
└──────────────┘     └──────────────┘
┌─────────────────────────────┐
│ OUTPUT/INPUT  DATA          │  S25
└─────────────────────────────┘
```

◇ COINCIDENT ? ◇ NO    S27    
YES    S26

┌──────────────┐
│ STOP CPU,    │
│ PPU  ETC.    │
└──────────────┘

┌─────────────────────────────────────────┐
│ MAKE OPERATION AS                       │
│ SAME AS STEPS19−17,                     │
│ BUT RESET SIGNAL                        │
│ IS NOT OUTPUTTED  TO                    │
│ MAIN UNIT, THEREFORE                    │
│ KEY ƯP CANNOT RESET                     │
│ MAIN UNIT AND RELEASE                   │
│ RESET STATE OF MAIN                     │
│ UNIT                                    │
└─────────────────────────────────────────┘

S19'
?
S27'

FIG.14